# EUROPEAN PATENT APPLICATION

(11) **EP 3 182 658 A1**
(43) Date of publication of application: **21.06.2017**
(21) Application number: 15307018.0
(22) Date of filing: 16.12.2015
(51) Int. Cl.: H04L 12/801, H04L 12/851, H04L 12/835

(54) **METHOD, DEVICE AND SYSTEM FOR OVERHEAD MINIMIZATION**

(71) Applicant: ALCATEL LUCENT, 92100 Boulogne-Billancourt (FR)
(72) Inventor: AYDIN, Osman, 70435 Stuttgart (DE); AZIZ, Danish, 70435 Stuttgart (DE); AMBROSY, Anton, 70435 Stuttgart (DE); BAKKER, Hajo, 70435 Stuttgart (DE)
(74) Representative: Wetzel, Emmanuelle

(57) **Abstract**

A method for overhead minimization in a wireless communication network is proposed. A communication flow (300) is started between two peer entities which are configured to operate in a pre-determined first operating mode. Following that the peer entities are configured to switch (306) to a further operating mode based on at least one operating parameter (302).

## Description

### TECHNICAL FIELD

This application is directed, in general, to wireless cellular networks and, more specifically, to systems, apparatus and methods for overhead minimization in 5G networks.

### BACKGROUND

Minimization of overhead (e.g. processing, signaling and resources) is one of the main goals for the design of future 5G wireless networks. The consideration of overhead becomes critical when 5G networks are envisioned supporting diverse services including sporadic, delay tolerant small data packet services. In addition to these services, 5G networks are also expected to adjust with the diverse processing capacity of the terminals and their energy consumption requirements. In this disclosure focus is put on the problem of Radio Access Network (RAN) protocol design for 5G wireless networks such that the protocol overhead (especially for small data packet services) can be minimized. Optimizing the transmission protocols enables guaranteeing the efficient use of resources both in the network (e.g. radio resources) as well as in the terminal (e.g. computational resources, battery power, critical buffer memory).

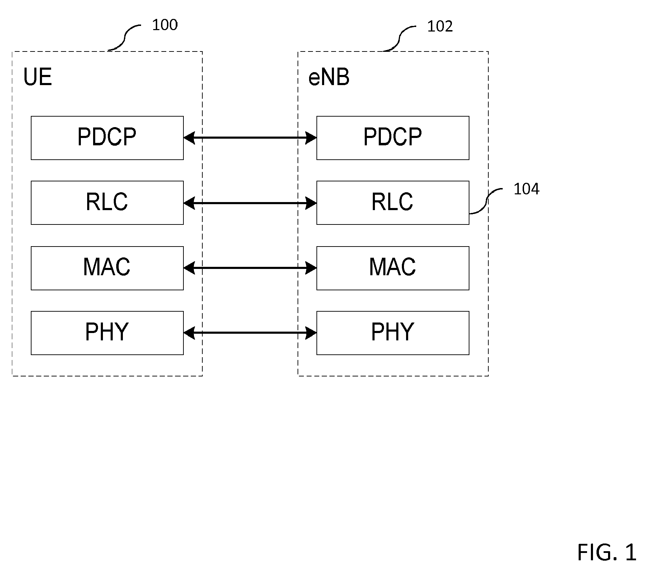

Figure 1 shows the protocol stack between a user equipment (UE) and an eNodeB in an LTE network. The main functions of the Radio Link Control (RLC) layer include concatenation, segmentation, re-ordering, and re-transmissions. There are three operational modes defined for the RLC layer and are described in 3GPP TS.36.322. These are the Transparent Mode (TM), the Acknowledge Mode (AM) and the Un-acknowledge Mode (UM). The configuration and usage of these modes is predefined with respect to the information content. The RLC-TM mode is normally used only for certain control information (e.g. broadcast, paging). In the RLC-TM mode, a packet from the PDCP stack is forwarded to the MAC stack (and vice versa) without any RLC header. The RLC-AM/UM modes are normally used for user data transmission. This predefined and static configuration does not allow the minimization of protocol overhead whenever possible. Moreover it takes away the degree of freedom for overhead minimization even if the data flow may allow it. It could even be that the presence of RLC functions is not required when an application just sends a keep-alive message (e.g. for maintaining a TCP connection) to its server.

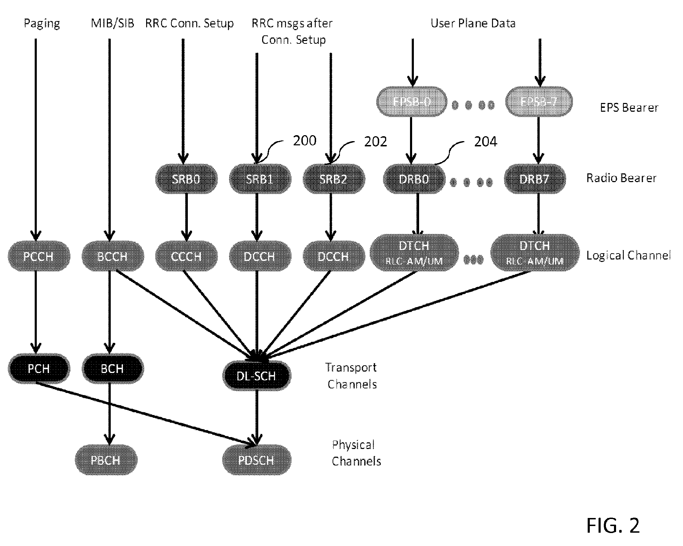

Figure 2 shows the mapping in the form of links between EPS bearers, radio bearers, logical channels, transport and physical channels in current LTE networks. The configuration of the Signal Radio Bearers SRB1 or SRB2 defines the configuration of the Data Radio Bearers DRBs and accordingly the RLC mode (AM/UM) for the logical channels. A detailed description of this Figure is out of the scope of the invention and serves mainly for illustrative purposes.

One of the improvements in the direction of protocol overhead minimization is known for machine type devices. This was the subject of the EU project "Exalted". These improvements are based on the removal of the RLC layer for machine type devices and communication. This solution though is limited only to a special kind of devices. 5G networks require a more generic solution, mainly to be based on the traffic characteristics. For example, it is very common to have the case of keep-alive messages, notifications and short message exchange used by the applications in the current smart phones. Many of these services mainly use small data packets. However, the mentioned solution is not able to optimize these cases as it only focuses on sensors or machine type devices.

### SUMMARY

It is an object of the present invention to obviate the above disadvantages and provide an advantageous transmission protocol for wireless communication in a 5G network.

According to one embodiment of the invention, a method for overhead minimization in a wireless communication network is proposed. A communication flow is started between two peer entities. These peer entities are configured to operate in a certain pre-determined operating mode. The peer entities are subsequently configured to switch to another operating mode based on at least one operating parameter.

According to another embodiment of the invention, a wireless network node for overhead minimization in a wireless communication network is proposed. The wireless network node is configured to operate in a certain pre-determined operating mode. and comprising an interface for communicating with a peer entity in the wireless communication network, a processor adapted to switch to a further operating mode based on at least one operating parameter.

According to a final embodiment of the invention, a wireless communication system comprising a user equipment and a wireless network node, wherein a communication flow is started between the user equipment and the wireless network node, said user equipment and wireless network node being configured to operate in a pre-determined first operating mode wherein said user equipment and wireless network node being configured to switch to a further operating mode based on at least one operating parameter.

Further advantageous features of the embodiments of the invention are defined and are described in the following detailed description.

### BRIEF DESCRIPTION OF THE DRAWINGS

Reference is made to the following description taken in conjunction with the accompanying drawings, in which:
Figure 1 shows the protocol stack between a user equipment (UE) and an eNodeB in an LTE network,
Figure 2 shows a mapping of bearers and channels in the state of the art,
Figure 3 shows a flow diagram of the adaptive monitoring and selection algorithm for RLC modes,
Figure 4 shows an example CQI distribution of a UE over time,
Figure 5 shows a mapping of bearers to logical channels in the proposed solution for future networks,
Figure 6 shows a wireless network node according to the invention.

### DETAILED DESCRIPTION

Embodiments of methods, devices and systems are described herein for the overhead minimization in 5G wireless networks.

The invention proposes a new algorithm in 5G wireless networks that allows a traffic centric selection of an RLC mode for user plane data transmission. Future wireless networks should be able to adaptively select one of the RLC modes for data transmission. This selection can be based on certain effective parameters.

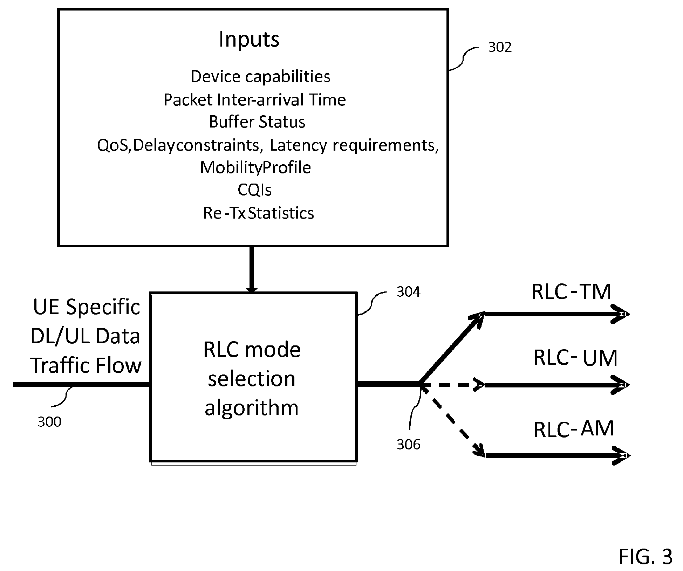

Figure 3 shows a block diagram for the algorithm that can be run in the eNB for the user plane data packets that uses certain parameters as input and provides an optimized RLC mode as output. The required RLC modes can be pre-configured depending on the QCI of the traffic flow for a given service. For a RLC entity configured at the eNB, there is a peer RLC entity configured at the UE and vice versa.

Before executing the algorithm a pre-configuration step is performed. The RLC peer entities have to be preconfigured with one of the RLC chains: TM/AM or TM/UM or AM/UM or TM/AM/UM. The pre-configuration can be done with the help of a new "RRC-configuration" message sent to the peer entities.

Given that the peer entities are pre-configured the network may start a communication flow (Upload or Download) 300 with a certain RLC-configuration. The flow is signified as UE specific DL/UP Data traffic flow 300 in Figure 3. The network should be able to monitor the effective parameters which can be the input parameters 302 shown in Figure 3. These parameters 302 may be any or all of the communication device capabilities, the packet inter-arrival times, the message buffer status, QoS requirements, Delay and latency requirements, mobility profile of the mobile device, Rx-Tx Statistics, Channel Quality Indication (CQI) etc. The parameters may be more than the ones mentioned and may be introduced in the future as inputs to the proposed algorithm.

Taking the input parameters 302 into account the monitoring and selection algorithm 304 may decide to continue with the same selected RLC configuration or may decide to select 306 a different RLC configuration in order to minimize the overhead while maintaining a given efficiency. This monitoring can be done by the RRC functions.

For a given transmission (DL/UL), Logical Channel Identifiers (LCIDs) 500 can be used to indicate the RLC mode. In case of uplink transmission, to enable the network based monitoring and control over this procedure, an RRC message can be used to trigger the RLC-mode-switch for upcoming uplink transmissions. In downlink transmission it is enough to use the switching of LCID as an indicator for the change of RLC mode (e.g. AM to TM accordingly with specific LCIDs.)

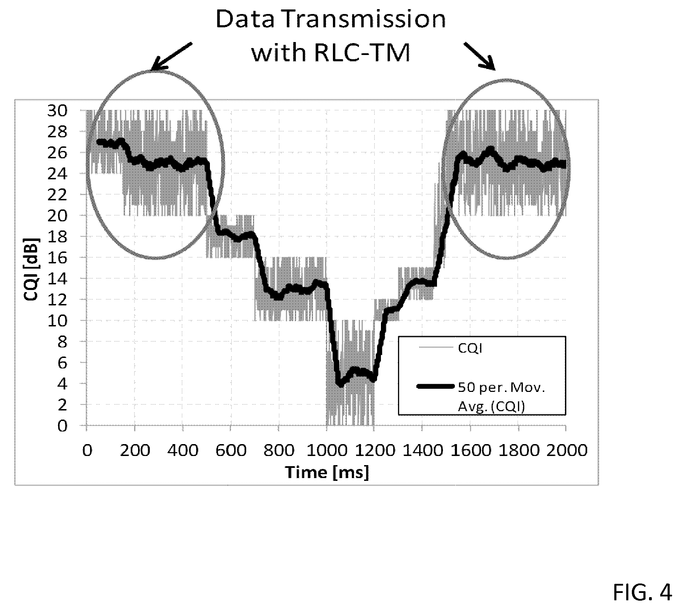

The invention will be further explained with the help of an example. A channel quality indication (CQI) distribution of a static UE is shown in Figure 4. The UE is served by an eNB equipped with an adaptive protocol selection module. It is assumed that the UE has started a session with an application that attributes to a sparse traffic pattern with short data packets, e.g. a Whatsapp session. In the case that the UE is reporting a high CQI this will be fed as input parameter to the RLC mode selection algorithm, as described above. Using this input and according to the output of the RLC mode selection algorithm, the RLC-TM mode will be selected for transmission. Below a preconfigured CQI threshold, the RLC mode will be switched to AM or UM mode. Switching into another RLC mode may be triggered by using a new Logical Channel ID.

In another example a UE that transits from RRC-idle to RRC-active state with an http session and with good channel conditions is considered. While in connected state, the user stops the http session and starts a Whatsapp session with short message exchange. Both applications are using the same bearer with the same QCI (best effort service). However, the low activity of the UE and the delay tolerant sporadic nature of the traffic during the Whatsapp session can be detected with the help of packet arrivals in the data buffer. Using the data buffer status as an input the RLC mode selection algorithm can decide to switch to the RLC-TM. A similar approach is followed, if a user starts a Whatsapp session with a preconfigured best effort bearer by downloading pictures received from another user's UE and after that the users exchange only short messages. For the short message exchange RLC-TM can be used.

In case of transition from RLC-AM to RLC-TM the RLC-AM process is to be cleared at the receiver side (i.e. at UE side). The UE can be informed by the network either directly with a RLC-AM last block indicator in the last RLC-AM transmission, similar to the Final Block Indicator (FBI) bit in GSM, or a specific timer delay at the end of a RLC-AM transmission. These measures are not required for the transition from RLC-TM to RLC-AM, as no RLC acknowledgements are sent for the RLC transparent mode at all.

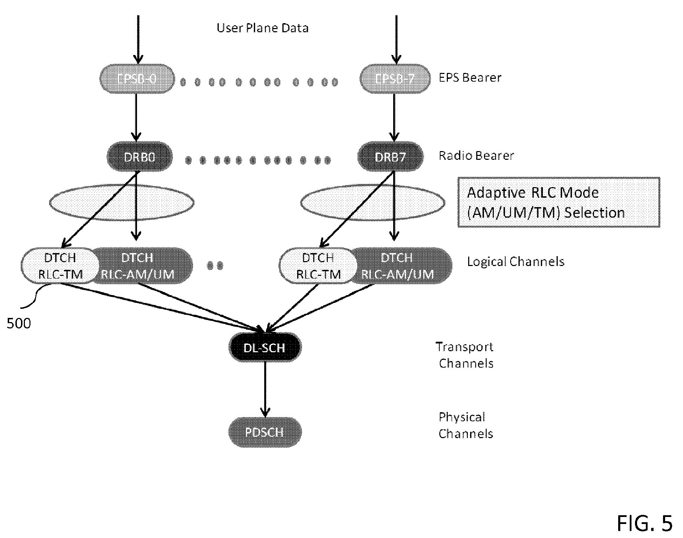

Figure 5 shows a mapping of bearers to logical channels in the proposed solution for future networks. Between the radio bearers and the logical channels the RLC-TM mode 500 is introduced.

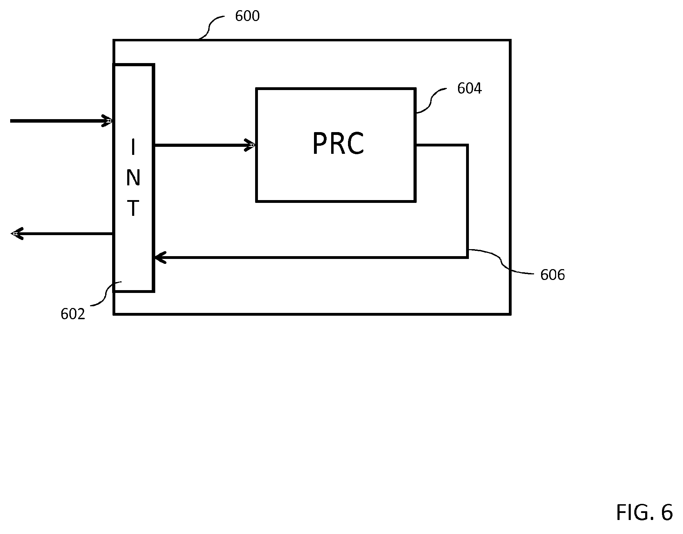

Figure 6 shows a wireless network node 600 according to the invention. The wireless network node 600 is adapted to minimize the overhead when it becomes part of a wireless communication network. The wireless network node 600 is configured to operate in a certain operating mode which can be also named as a first operating mode. This operating mode is pre-configured in the sense that when a communication flow is initiated with another entity or another peer in the wireless communication network the wireless network node takes part in the communication flow in this specific mode. This mode may be a Radio Link Control Transparent mode, a Radio Link Control Acknowledged mode or a Radio Link Control Unacknowledged mode.

The wireless network node comprises an interface 602 through which it is adapted to communicate with peer entities in the wireless communication network. These peer entities may be for example a user equipment which may also be pre-configured to operate in a certain operating mode. The wireless network node 600 and the peer entity, i.e. the user equipment should operate in the same operating mode in order to take part in the communication flow.

The wireless network node 600 further comprises a processor 604 which is adapted to receive one or more operating parameters from the wireless communication network and/or the user equipment and based on these parameters identify another or further operating mode and eventually switch to this further operating mode. This further operating mode can be the same with the first operating mode or a different one. The switching of the operating mode is sent to the user equipment communicating with the wireless network node over the interface 602 as signified by connection 606.

The application of the solution described by this invention allows a minimization of overhead on the air-interface from a network perspective especially when a big number of applications and devices are engaged in communication with each other using delay tolerant, sporadic and short data packet traffic.

From a user equipment perspective the described solution allows energy efficiency, computational and memory savings.

Furthermore, this proposal provides the usage of RLC TM Mode for user data in a flexible manner. The RLC Mode can be switched between the RLC AM, RLC UM, RLC TM. For UEs in good network conditions the data transfer can be switched to RLC TM and so the amount of bits transferred for the data and as well the whole acknowledgment transmission on the concurrent direction can be saved.

For Machine Type Communication devices the same benefits are valid as for the UEs and additionally the effect of using just the RLC TM mode in such devices can allow a reduction in device complexity, cost and battery consumption.

The above description and the accompanying figures merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended to aid the reader in understanding the principles of the invention and the concepts contributed by the inventors to furthering the art. They are thus to be construed as being without limitation to such specifically recited examples and conditions. Moreover, all statements herein reciting principles, aspects, and embodiments of the invention, as well as specific examples thereof, are intended to encompass equivalents thereof.

## Claims

1. A method for overhead minimization in a wireless communication network wherein a communication flow (300) is started between two peer entities said peer entities being configured to operate in a pre-determined first operating mode the method comprising the step of the peer entities being configured to switch (306) to a further operating mode based on at least one operating parameter (302).

2. The method according to claim 1 further comprising the step of one of the peer entities selecting said further operating mode based on at least one operating parameter (302).

3. The method according to claim 1 wherein a Logical Channel Identifier (500) is used to indicate the further operating mode and switch to the further operating mode.

4. The method according to claim 1 wherein the two peer entities are a user equipment and a wireless network node (600).

5. The method according to claim 3 wherein the wireless network node (600) is an LTE wireless base station.

6. The method according to claim 1 wherein said first operating mode is one of a Radio Link Control Transparent mode, a Radio Link Control Acknowledged mode and Radio Link Control Unacknowledged mode.

7. The method according to claim 1 wherein said further operating mode is one of a Radio Link Control Transparent mode, a Radio Link Control Acknowledged mode and Radio Link Control Unacknowledged mode.

8. The method according to claim 1 wherein said further operating mode is the same as the first operating mode.

9. The method according to claim 1 wherein said operating parameter is one of a device capability, a packet inter-arrival time, a data buffer status, a quality of service requirement, a latency requirement, a mobility profile of said user equipment and a channel quality indication.

10. The method according to claim 1 wherein the peer entities are configured to operate in a pre-determined first operating mode before the communication flow is started.

11. The method according to claim 1 wherein the communication flow is a data download traffic flow.

12. The method according to claim 1 wherein the communication flow is a data upload traffic flow.

13. A wireless network node (600) for overhead minimization in a wireless communication network the wireless network node being configured to operate in a pre-determined first operating mode and comprising an interface (602) for communicating with a peer entity in the wireless communication network, a processor (604) adapted to switch to a further operating mode based on at least one operating parameter.

14. The wireless network node of claim 12 wherein said processor (604) is further adapted to select a further operating mode based on at least one operating parameter.

15. The wireless network node of claim 12 wherein said interface (602) is adapted to send a logical channel identifier indicating said further operating mode to said peer entity.

16. A wireless communication system comprising a user equipment and a wireless network node, wherein a communication flow is started between the user equipment and the wireless network node, said user equipment and wireless network node being configured to operate in a pre-determined first operating mode wherein said user equipment and wireless network node being configured to switch to a further operating mode based on at least one operating parameter.

17. The wireless communication system of claim 16 wherein the wireless communication system is adapted to perform the method of any of the claims 1 - 12.
